# EUROPEAN PATENT APPLICATION

(11) **EP 2 374 347 A1**
(43) Date of publication of application: **12.10.2011**
(21) Application number: 10003724.1
(22) Date of filing: 07.04.2010
(51) Int. Cl.: A01F 29/00, A01K 5/00

(54) **Device for shredding, cutting and discharging of straw material**

(71) Applicant: JBT Maskinværksted, 7171 Uldum (DK)
(72) Inventor: Bregnbjerg Therkildsen, Jens, 7171 Uldum (DK)
(74) Representative: Schmidt, Jens Joergen

(57) **Abstract**

The invention relates to a bale processing device (100) comprising a feeding channel (1) including an open inlet end (17) through which a bale of straw material can be fed to a radial blower housing (2) accommodating shredding and discharging means including a shredder wheel (7, 8) provided with shredder drive means (5) for rotation of the shredder wheel (4), where the radial blower housing (2) is provided with one or more peripherally arranged discharge channels (3) and where the axis or rotation of said shredder wheel (4) is substantially parallel with said feeding channel (1). The device is characterised in that in respect of one or more of said one or more peripherally arranged discharge channels (3), a cutter (200) comprising cutting knife means (50) for reducing the size of the straw material is arranged downstream of said shredder wheel (4).

During use, the device is tilted at an appropriate angle in such a manner that the bale of straw placed in the inlet housing connects with the shredder wheel and slides down towards the wheel for shredding by means of gravity. The shredder wheel in conjunction with the cutter will provide for spreading straw having a reduced and desired length.

## Description

### Technical field of the invention

The present invention relates in a first aspect to a device for shredding and cutting and discharging of straw material for spreading in a stable or barn or the like according to the particulars set out in claim 1. Furthermore the present invention relates in a second aspect to the use of such a device for spreading a straw material according to the particulars of claim 15.

In relation to the keeping of livestock, straw, hay or the like is scattered on a regular basis in the stable or barn where the livestock is present. For this purpose, straw material which has previously been gathered and pressed into a bale is used.

### Technical background

Discharging machines are known, in which a bale of straw is inserted and introduced to shredding after which the shredded straw is scattered onto the floor of the barn or on a field. However, these machines are quite voluminous and have to be operated by means of a tractor or a similar vehicle. This means that quite a lot of space is required, e.g. in the aisle of a barn in order to use this machinery for the discharging of straw. Until a few years ago, it was often not possible to use such a discharging machine mounted on a tractor as the slotted floor of the barn will not be able to carry the weight of the discharging machine and the tractor.

The above-mentioned problems relating to the size and weight of the discharging machines were solved by the invention disclosed in DK 176 729. This invention discloses a device for shredding and discharging of straw, hay or the like in a barn or the like, said device comprising a feeding channel including an open inlet end through which a bale of straw can be is fed to a radial blower housing accommodating shredding and discharging means including a shredder wheel provided with drive means for rotation of the shredder wheel, and where the radial blower housing is provided with at least one peripherally oriented discharge channel for discharging of straw, wherein the feeding channel is provided with a substantially rectangular cross-section and includes a tilted inlet plate on the lower side of the channel on which a bale can be inserted and slide down towards the shredder wheel.

During use, the device is tilted at an appropriate angle in such a manner that the bale of straw placed in the inlet housing connects with the shredder wheel and slides down towards the wheel for shredding by means of gravity. This makes the embodiment particularly simple, lightweight and very reliable as it has only one single moveable part. Also, the device according to DK 176 729 is particularly compact and may be constructed with the proper small dimensions whereby the field of application may be significantly increased.

However, in situations where straw and/or hay exceeding a certain straw length is to be used as a covering for household animals which are located on a slotted floor it has turned out that relatively long straws will intertwine upon mixed with the urine and faeces collected underneath the slotted floor. This intertwining of the straws makes it extremely difficult to handle the slurry comprising the straws, urine and faeces from the animals. For this reason, when used as a floor covering for animals located on a slotted floor it is preferred to use hay or straw having a straw length of relatively small size.

US 2006/0006266 A1 discloses a device for discharging crop material originating from a bale. The device comprises a disintegrator comprising a shredder in the form of a rotating flail roller for shredding the bale and a feed cutter arranged downstream from said disintegrator. It appears from US 2006/0006266 A1 that the direction of the movement of the bale into the device is perpendicular to axis of rotation of the rotating flail roller for shredding the bale. This perpendicular axis of rotation however has the disadvantage that the bale material upon its way into the flail roller is prone to be wedged in a locked position between the flail roller and the adjacent non-rotating part of the device. This results in an inhomogeneous flow of material being processed, or worse that the device must be stopped in order to remove the material that has been locked due to the wedging. Furthermore, due to the design of the cutter of the device according to US 2006/0006266 A1, the material exiting the cutter will simply fall to the ground in an essentially vertical direction. Accordingly, the device according to US 2006/0006266 A1 does not allow for "shooting" the shredded and cut bale material at a relative long distance, such as 2 - 4 meters or more with the view to arrange the shredded and cut material on the ground in e.g. pigsties located alongside the aisle of a stable, let alone to shoot the material into pigsties corresponding to an adjacent aisle in relation to the aisle in which the device is located.

Thus, it is the purpose of the invention to create a device for shredding and cutting and discharging bales of straw, hay or the like which overcomes the above-mentioned disadvantages from the known machines and which furthermore makes utilisation of the device in small barns possible.

### Brief description of the invention

In a first aspect, the present invention relates to a bale processing device comprising a feeding channel including an open inlet end through which a bale of straw material can be fed to a radial blower housing accommodating shredding and discharging means including a shredder wheel provided with shredder drive means for rotation of the shredder wheel, where the radial blower housing is provided with one or more peripherally arranged discharge channels and where the axis or rotation of said shredder wheel is substantially parallel with said feeding channel. The device according to the first aspect of the present invention is characterised in that in respect of one or more of said one or more peripherally arranged discharge channels, a cutter comprising cutting knife means for reducing the size of the straw material is arranged downstream of said shredder wheel.

In a second aspect, the present invention relates to use of a device according to the first aspect for spreading straw material, such as hay or straw and the like in a farm, especially in a stable of a farm.

The device and the use according to the first and the second aspect respectively provides the advantages of obtaining a relatively small and lightweight apparatus for shredding and cutting straw material that is able to be used in confined spaces and on fragile foundations, such as slotted aisles in stables for lifestock animals.

Furthermore, the design of the shredder wheel results in the effect that the problem of bale material being wedged in a locked position is completely avoided because, the direction of movement of the bale material upon entry into the device, is parallel with the axis of rotation of the shredder wheel.

Additionally, the design of the device comprising a blower housing has the effect that it is possible to shoot the shredded and cut material a long distance, such as several meters. This makes the process of spreading the material onto the floor of e.g. pigsties a lot easier.

### Brief description of the drawings

- fig. 1: is a perspective view of a device for shredding and discharging according to the prior art as seen from a rear end,
- fig. 2: is an exploded side view of the device of fig. 1 as seen from the side,
- fig. 3: shows an exploded perspective view hereof,
- fig. 4: is a perspective view of one embodiment of the device according to fig. 1 as seen from a front end,
- fig. 5: is a side view of the prior art device of fig. 1 mounted on a tractor,
- fig. 6: of a device for shredding, cutting and discharging according to the present invention as seen from a front end,
- fig. 7: is a plane view of one embodiment of the device according to the present invention showing the shredder wheel and a downstream located cutter,
- fig. 8: is a perspective view showing details of one embodiment of the cutter of the device according to the invention,
- fig. 9: is a perspective view of one embodiment of a sieve to be mounted downstream of the shredder wheel of the device of the present invention,
- fig. 10: is a perspective view of another embodiment of a sieve to be mounted downstream of the shredder wheel of the device of the present invention.

### Detailed description of the invention

### The present invention according to the first aspect

The invention relates in a first aspect to a bale processing device comprising a feeding channel including an open inlet end through which a bale of straw material can be fed to a radial blower housing accommodating shredding and discharging means including a shredder wheel provided with shredder drive means for rotation of the shredder wheel, where the radial blower housing is provided with one or more peripherally arranged discharge channels and where the axis or rotation of said shredder wheel is substantially parallel with said feeding channel. The device is characterised in that in respect of one or more of said one or more peripherally arranged discharge channels, a cutter comprising cutting knife means for reducing the size of the straw material is arranged downstream of said shredder wheel.

Hereby, a shredding and discharging machine is provided by means of which the bale of straw, hay or the like is in direct contact with the shredder wheel and whose rotation is simultaneously used to discharging the shredded straw. During use, the device is tilted at an appropriate angle so that the bale of straw placed in the inlet housing abuts the shredder wheel and slides down towards the shredder wheel by means of gravity. This makes the device according to the invention very simple and very reliable. In addition, the device according to the invention is particularly compact and may be designed with the proper small dimensions whereby the field of application is significantly increased.

In the present description and in the appended claims, the term "downstream" shall have the usual meaning and in the context of the present invention, the downstream direction is defined by the direction of the movement of the straw in the form of a bale entering the feeding channel and exiting the discharge channel(s) as straws having a reduced length.

A device according to the invention may have a compact design and thereby low weight. Also, it may be mounted to a mini-tractor or mini loader such as a so-called "Bobcat^{™}" whereby the load caused by weight will be reduced significantly. The result is that it is also possible to use a device according to the invention for shredding and discharging straw in a continuous manner in barns with narrow aisles and/or slotted floors which provides a significant increase in the field of application of a device according to the invention.

The device is suitable for big bales of straw. The device when mounted on a vehicle can be lowered and the vehicle that is driven in position and slits the inlet feeding plate of the feeding channel underneath a bale that hereby is pushed into the feeding channel. The bale is then lifted so it slides into the feeding channel whereby it is ready to be shredded and discharged when the shredder wheel is turned on.

The shredder wheel may comprise a circular plate provided with wheel cutting blades on the side facing the feeding channel. Hereby, an efficient shredding of the end of the bale is ensured just as the circular plate ensures that shredded straw will not get caught in the blower housing, e.g. on the back of the shredder wheel. Thus, the straw is not in contact with the drive shaft of the shredder wheel since it is situated at the opposite side of the knives.

Furthermore, the circular plate may be provided with a number of evenly dispersed radial support means on which cutting blades have been mounted. Hereby, the shredder wheel may be a relatively light weight construction as the wheel plate may be constructed from a relatively thin plate material which may be supported where necessary. The blades may also assist in creating a circular air flow in blowing the shredded straw out through the discharge channel.

At the opposite side, the shredder wheel may be provided with blower wings. Hereby, a vortex is created inside the radial blower housing which provides good circulation of the air flow propelling the shredded straw from the blower housing and out through the discharge channel. In this way the blower housing ensures that the shredded and subsequently cutted straw material will obtain an angular speed within the blower housing that allows the straw material to be shot at a relatively long distance, such as 2 - 4 meters or more.

In one embodiment of the first aspect of the invention, the device is provided with fastening means, preferably on the outside of the radial blower housing, for mounting of the device to a vehicle such as a mini-tractor, a mini-loader or the like. These fastening means preferably comprises a first fastening plate welded onto the outside of the housing and whereto another fastening plate is bolted. The second fastening plate is designed with mounting means corresponding to the mounting means on the vehicle to which the device is to be mounted. Hereby, only one of the fastening plates must be fitted to the vehicle, whereby the device is relatively easy to adapt to a variety of vehicles.

The inlet housing is preferably designed with a height of approx. 92.5 cm and a width of approx. 92.5 cm, said dimensions essentially corresponding to the outer measurements of a mini big-bale of straw. In this manner, the device is particularly suited be used in connection with the so-called mini big-bales of straw.

In one embodiment of the first aspect of the present invention the shredder wheel is rotatable in both directions. Furthermore, in one embodiment, the radial blower housing is provided with at least two peripheral discharge channels pointing in different directions. With a device according this embodiment of the invention, the side from which shredded straw is to be discharged is chosen by simply changing the direction of rotation of the shredder wheel which also works as a blowing wheel as has already been explained above. This provides additional flexibility in relation to the field of application.

In one embodiment of the first aspect of the present invention the cutter is accommodated in a corresponding dedicated discharge channel. This embodiment provides for a very simple design of the device according to the invention.

In one embodiment of the first aspect of the present invention the cutter comprises a cutter axle, wherein said cutting knife means comprises of one or more cutter knives being connected to said cutter axle, and wherein the cutter is provided with cutter drive means for rotation of said cutter axle.

In this embodiment, it is preferred that the cutter knifes comprise an array of 1 - 30 knives, such as 2 - 25 knives, e.g. 3 - 20 knives, such as 4 - 19 knives, for example 5 - 18 knives, e.g. 6 - 17 knives, such as 7 -16 knives, e.g. 8-15 knives, such as 9 - 14 knives, e.g. 10 - 13 knives, such as 11 - 12 knives; said knives being arranged onto said cutter axle, wherein said knives preferably being longitudinal knives and preferably being arranged in an axially orientation.

These embodiments of the device have proven extremely effective in cutting the straws originating from the shredder wheel to a desired straw length.

In order to adjust the length of the straws exiting the device, the device may be provided with means allowing adjusting the rotational speed of the cutter axle relative to the rotational speed of the shredder wheel.

In one embodiment of the device according to the present invention, the shredder drive means for rotating the shredder wheel and/or the cutter drive means for rotating the cutter axle of the cutter independently is a hydraulic motor or an electrical motor. Hydraulic and electrical motors have proven beneficial for this purpose.

In a preferred embodiment of the device according to the present invention, the shredder drive means for rotating the shredder wheel and said cutter drive means for rotating the cutter axle of the cutter are powered by the same hydraulic pump. Such an embodiment is advantageous due to its simplicity in that only one pump is used for driving two axles by means of to independent hydraulic motors.

In a preferred embodiment of the device according to the present invention, the device comprises in respect of said one or more peripherally arranged discharge channels which comprises a cutter, a sieve having exit holes is arranged downstream of said cutter. It has surprisingly been found that reliable control of the length of the straws exiting the device can be obtained by providing the device with such a sieve.

In one preferred embodiment of this embodiment, the sieve is arranged in such close proximity of said cutting knife means that during use of the device, straw material to be spread will continuously be subjected to the cutting action of the cutting knife means of the cutter until the size of each straw material has a size that facilitates exit through the exit holes of said sieve. By the term "such close proximity" shall be understood a proximity close enough to ensure that the cutting knife means by its movement will result in the straw material being moved around by the motion of the cutting knife means until the straw has a length that eventually facilitate the passing of the straw material though one or more exit holes of the sieve. The close proximity may mean a closest distance between the cutting knife means, such as the cutter knives, and the sieve of 1 - 20 cm, such as 2 - 19 cm, e.g. 3 - 18 cm, for example 4 - 17 cm, such as 5 - 16 cm, e.g. 6 - 15 cm, such as 7 - 14 cm, for example 8 - 13 cm, e.g. 9 - 12 cm, for example 10 - 11 cm.

In a preferred embodiment the area of one or more of the exit holes, such as the area of each exit hole is 0.25 - 50 cm², such as 0.5 - 40 cm², 0.75 - 30 cm², e.g. 1 - 20 cm², for example 2 - 15 cm², such as 3 - 10 cm², for example 4 - 9 cm², e.g. 5 - 8 cm², such as 6 - 7 cm². These areas have proven to beneficial in the process of shortening the lengths of hay or straw to the desired purpose for use in slotted floors for livestock animals.

It is preferred that the sieve covers the passage way for the straw material on its downstream way from the discharge channel and out of the device in such a way that in order for the straw material having been subjected to the cutting action of the cutting knife means of the cutter to exit the device, said material must pass through the holes of said sieve. In this embodiment only straws subjected to the moving action of the cutter and having a length that allows passage through the exit holes of the sieve will actually exit the sieve. Hence, a more uniform length distribution will result.

In a preferred embodiment the sieve is releasable exchangeable. This is advantageous in that one sieve may be exchanged with another one having exit holes of another area. Thereby, the lengths of the straw may be adjusted prior to the use of the device. By the term "releasable exchangeable" shall be understood that the sieved is not "permanently" fixed to the device, such as by welding or the like. Bolts may provide for a suitable means for providing this releasable exchangeability.

In a preferred embodiment af the device according to the present invention one or more of the discharge channels comprises hatch means for blocking the passage of straw material out of said one or more discharge channels. In a situation where for example the device comprises two discharge channels arranged so that the discharge direction of the exiting straw is essentially opposite in respect of these two channels, and wherein only one cutter is associated with the device, it is possible to use the device for shredding purposes only or for shredding and cutting purposes. Hence, if only shredding is desired one makes the shredding wheel turn in one direction and the hatch corresponding to the discharge channel associated with the cutter is closed whereas the hatch associated with the discharge channel not being associated with any cutter is opened. In this way, the device may be used for a shredding purpose. On the other hand, if shredding and cutting is desired, one makes the shredding wheel turn in the other direction and the hatch corresponding to the discharge channel associated with the cutter is opened whereas the hatch associated with the discharge channel not being associated with any cutter is closed. Accordingly, the device according to the first aspect of the present invention provides for full flexibility in relation to spreading straw material of different length. The term "hatch means" may encompass any type of means capable of switching between an open state allowing passage and a closed state not allowing passage. Hatch means may accordingly simply refer to a blinding plate.

Furthermore, the one or more discharge channels may be provided with an adjustable outlet nozzle that may be positioned so that the spray of shredded material is directed in a predetermined path. The nozzle may either be mounted on the upper part of the discharge channel or on the lower side, e.g. for spraying the shredded material in a ballistic path over a fence, railing or the like.

### The present invention according to the second aspect

In a second aspect the present invention relates to the use of a device according to the first aspect of the present invention for spreading straw material, such as hay or straw and the like in a farm, especially in a stable of a farm.

Corresponding preferred embodiments as those set out above in respect of the device per se applies to the use of the device.

### Description of preferred embodiments

In the following, preferred embodiments of the present invention will be described with reference to the drawings.

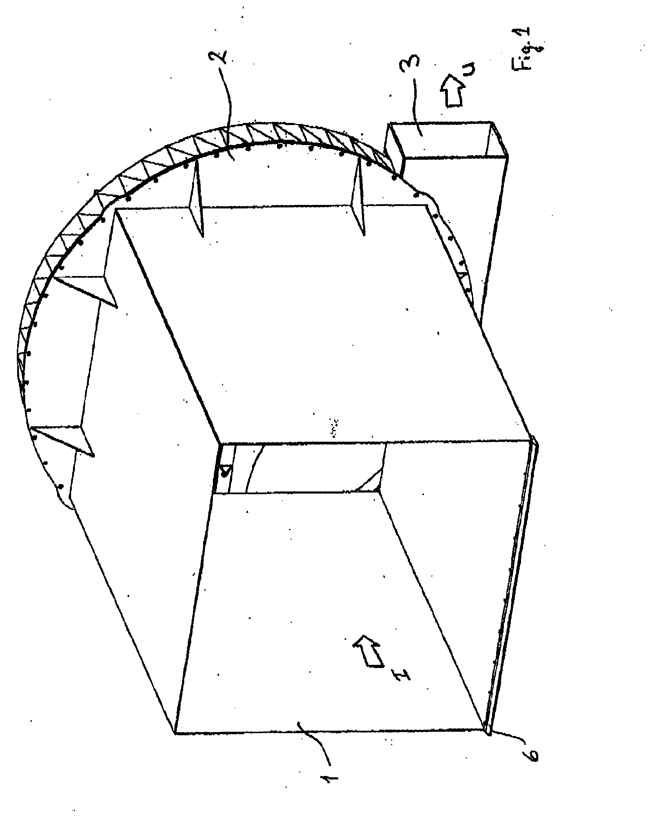

Fig. 1 - 5 depicts a prior art device according to DK 176 729. These figures also discloses the device according to the first aspect of the present invention with the exclusion of the cutter.

As shown in fig. 1, the shredding and discharging part of the device according to the invention comprises a box-shaped feeding channel 1 which is dimensioned so that the height and width hereof essentially correspond to the standardised dimensions of a bale of straw, hay or the like, in particular the so-called mini big-bales. The feeding channel 1 is open at a first inlet end and provided with a radial blower housing 2 at the other end, in which a shredder wheel 4 is arranged whereby the bale of straw is shredded into shredded straw. At the open end, the feeding channel 2 may be provided with a pick-up rail 6 which protects the rim/edge of the channel against wear and tear and which may easily be replaced once the rail 6 is worn.

The radial blower housing 2 is provided with preferably two discharge channels 3 placed in the periphery of the radial blower housing 2 which is essentially cylindrical in shape. The shredded straw is blown sideways out of the device through the discharge channels 3 at a blow direction U which is essentially perpendicular to that of the feeding direction I.

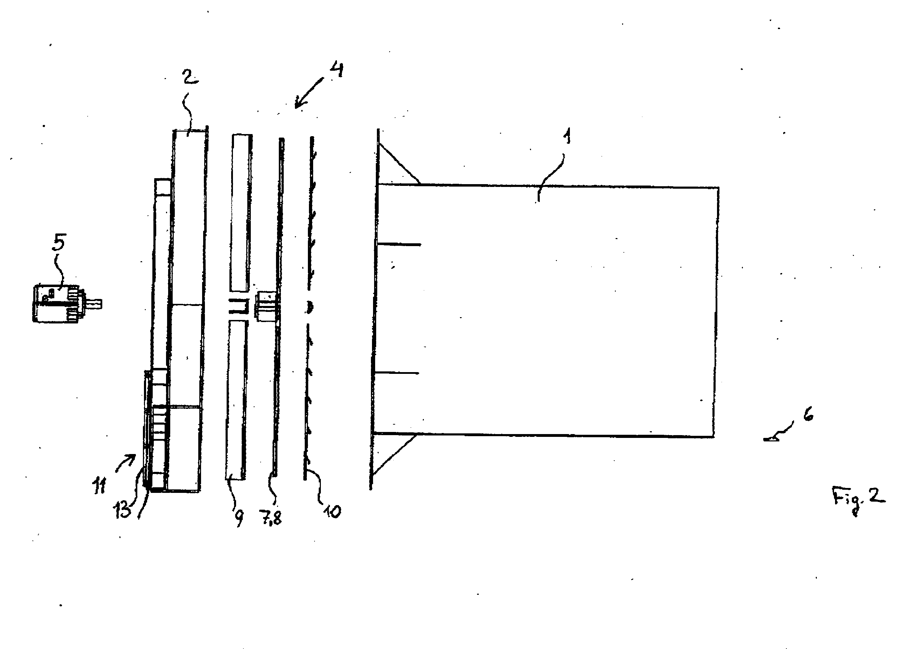

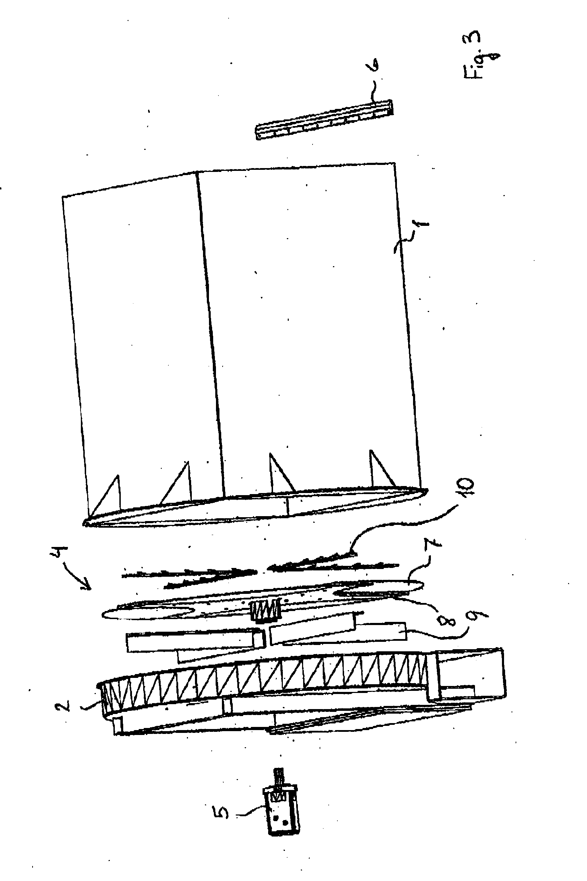

In the preferred embodiment of the invention, the shredder wheel 4 is driven by a hydraulic motor 5 as shown in figs. 2, 3 and 4. The hydraulic motor 5 is preferably connected to the hydraulic system i.e. a hydraulic pump of a vehicle such as a mini-loader e.g. a Bobcat. As illustrated in figs. 2 and 3, the shredder wheel 4 is constructed from a relatively thin, circular wheel plate 7, e.g. a 3 mm plate, mounted onto a "star-shaped" wheel 8 showing a number of symmetrically distributed support means on which knife blades 10 and blower wings 9 are mounted. This wheel 8 is preferably made of a metal plate of relatively large material thickness, e.g. 10-12 mm. The wheel 8 is mounted onto a shaft of the motor 5. The plate 7 shields the motor connection and ensures that the straws will not be caught in the moveable part of the device. On the side of the shredder wheel 4 receiving the bale of straw, the plate 7 is provided with a number of knives 10 for shredding the end of the bale of straw. On the back of the plate 7, a number of blower wings 9 are mounted whereby a circulation of the air flow is created which blows the shredded straw out through the discharge channels 3.

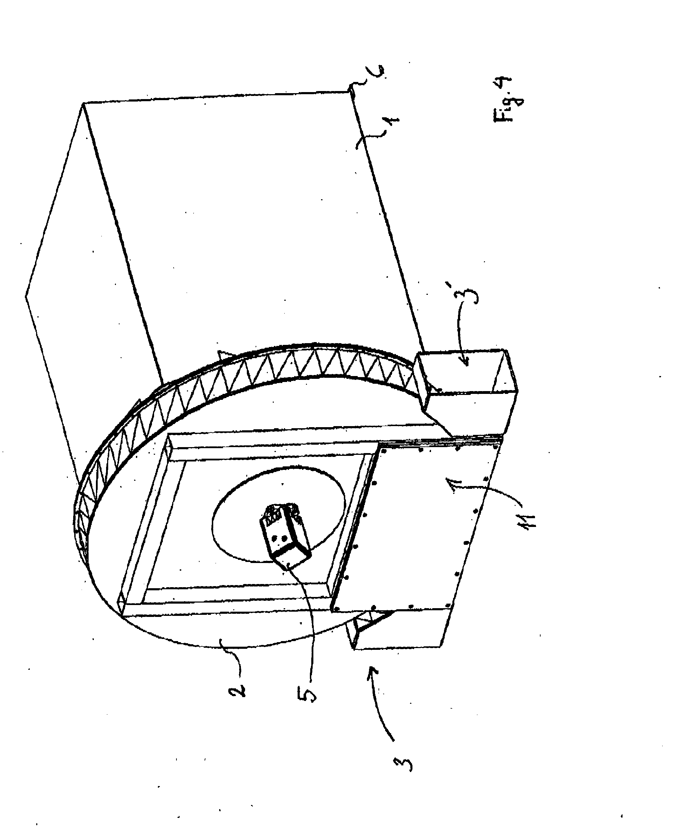

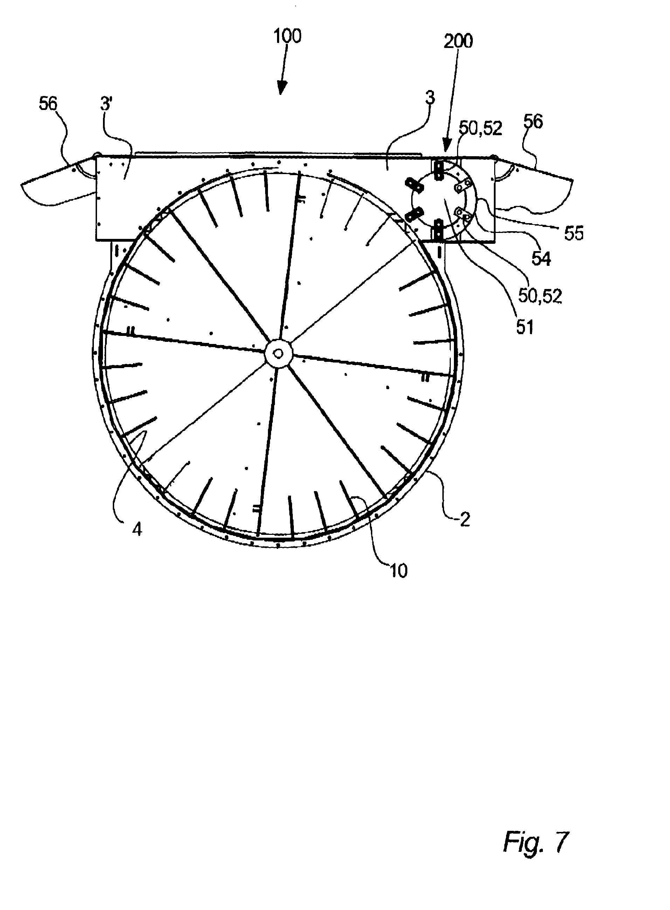

As it will be understood from figs. 4 and 7, the side to which the straw is discharged may be altered, since the direction of rotation may be changed whereby the vortex flow in the radial blower housing 2 is reversed and the shredded straw is blown out of the opposite discharge channel 3'.

At the end of the radial blower housing 2, air intakes 15 may be provided. The air intake 15 is preferably adjustable so that the amount of air that is sucked into the blower may be adjusted. The radial blower will normally take air through the feeding channel 1. However, if this amount is insufficient, the side spray of shredded material is not satisfactory unless an additional air intake 15 is provided. This is particularly advantageous when the spray must reach an area a fair a distance away and/or due to the condition of the bale of straw, hay or the like, e.g. the humidity of the straw, the type of straw material, the compression, the amount, etc.

Moreover, the feeding channel 1 is tilted relative to the radial blower housing 2. The latter means that the hydraulic motor 5 is somewhat retracted as compared to the first embodiment. This means that more compact overall dimensions of the device is achieved.

At the "inner" end of the feeding channel 1, retention bars may be provided around the opening between the cutting blades 10 of the shredder wheel 4 and the wall ember of the radial blower housing 2. This is to prevent straw from being dragged into the annular part of the blower housing 2 before being shredded by the knives 10. In this way, the risk of clogging the space in the blower housing 2 is reduced.

By the invention, it is realised that the discharge channel 3 or channels 3, 3' may be placed in the lower part of the radial blower housing, as shown on the figures, or at the top of the radial blower housing 2. In a further embodiment of the invention, the radial blower housing 2 could be provided with an essentially ring-shaped mounting flange that may be bolted or otherwise detachably fastened onto a corresponding flange on the feeding channel 1. In this embodiment, it will be possible to turn the radial blower housing 2 if a high blow-out level is desirable. This would also contribute to increasing the flexibility in relation to the field of application of a device according to the invention.

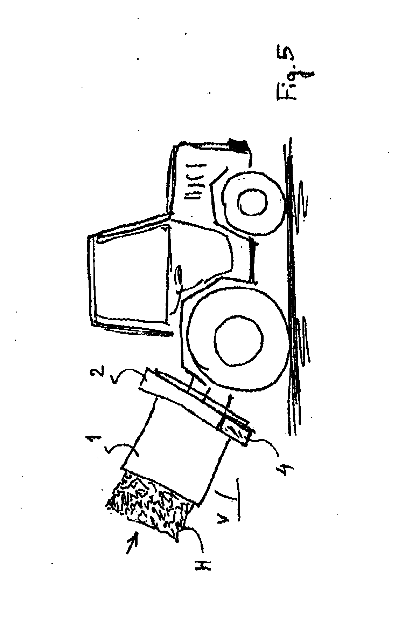

Fig 5 shows prior art device mounted on a tractor and carrying a bale H.

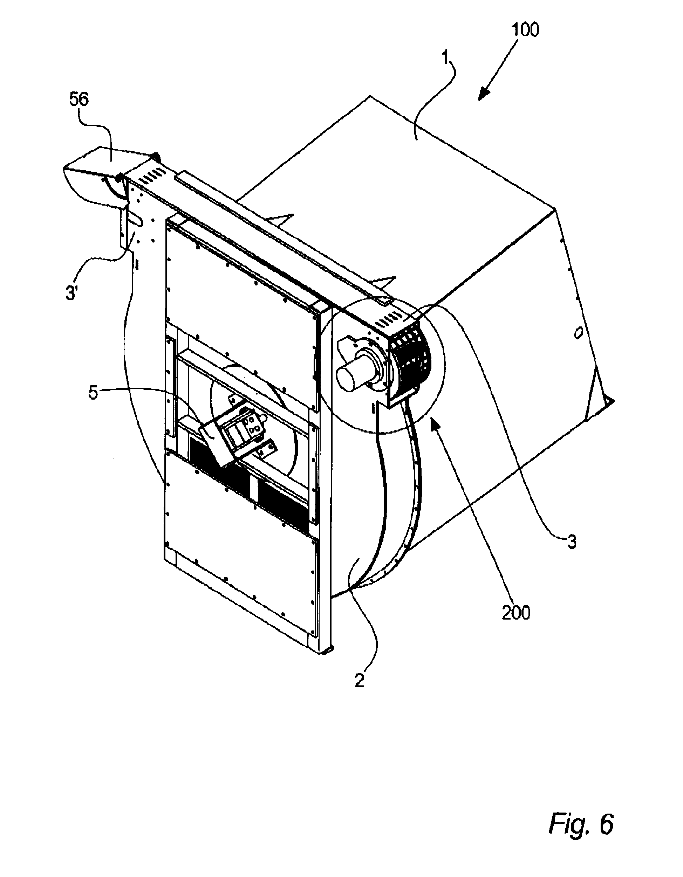

Fig 6 shows a preferred embodiment of the device 100 according to the present invention. The device comprises two discharge channels 3,3'. In this embodiment, a cutter 200 is arranged inside one of the discharge channels 3 in a down stream position relative to the shredder wheel. The opposite discharge channel 3' is provided with hatch means 56. In this embodiment the hatch means is simply a blinding plate which may be arranged and locked into an open position or into a locked position.

Fig 7 shows in detail the arrangement of the cutter 200 in one discharge channel 3. the cutter comprises a cutter axle 51 onto which cutting knife means 50 in the form of six cutter knives 52 are arranged. The axle being driven by a cutter drive means (not shown in fig. 7). The device shown in fig. 7 furthermore comprises a sieve 54 comprising an array of exit holes. The sieve 54 is arranged in close proximity of the knife cutting means 50. In the device shown in fig. 7 straw which has been shredded by the shredder wheel 4 will be forced towards the cutter 200. The cutter 200 will by its rotating movement ensure that the straw will be cut to smaller length. The cut straw will then be subjected to the rotating motion of the means and knives 50,52 until the straw has a length that allows easy escape though the holes of the sieve 54. No clogging or wedging will occur as the straw will be continuously cut until it escapes the discharge channel 3. When the cutter is used in the device of fig. 7, the shredder wheel 4 will rotate in a clockwise direction and preferably the hatch 56 associated with the discharge channel 3' will be closed. Any suitable design of the cutter is contemplated as long as it serves the desired purpose to cut the straw material into shorter lengths

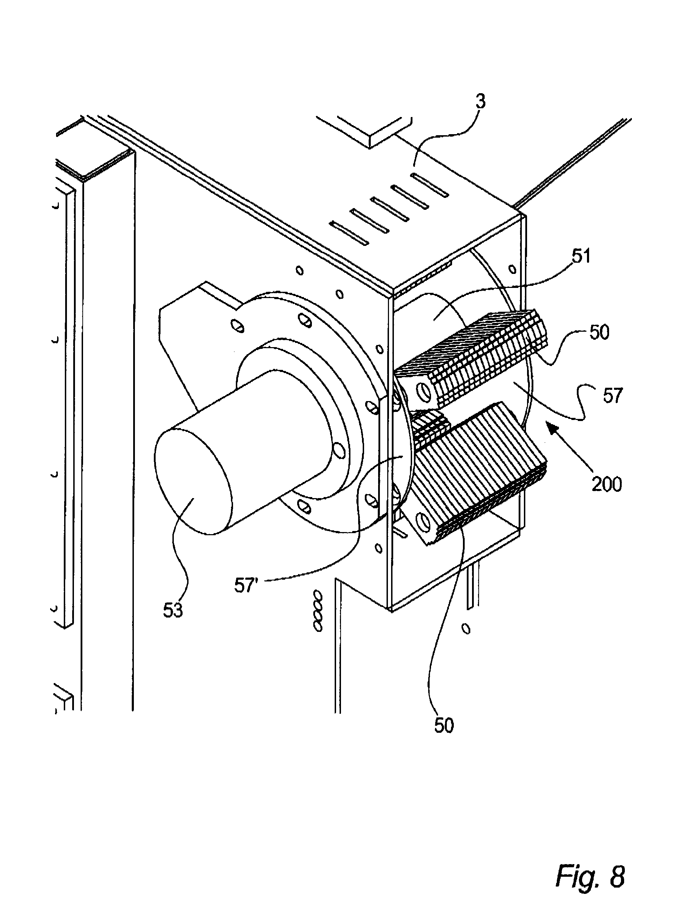

Fig 8 is a detailed drawing of the cutter of fig. 7. The cutter axle is driven by the cutter drive means 53. The cutting knife means comprises sets of metal lamellas 50,52 being arranged between two flanges 57,57' arranged onto the cutter axle 51.

Preferably each set of lamellas 50,52 being mounted to the flanges 57,57' by a penetrating bolt penetrating the flanges as well as the set of lamellas 50,52. Each lamella may be or may not be individually and freely pivotally movably around said bolt

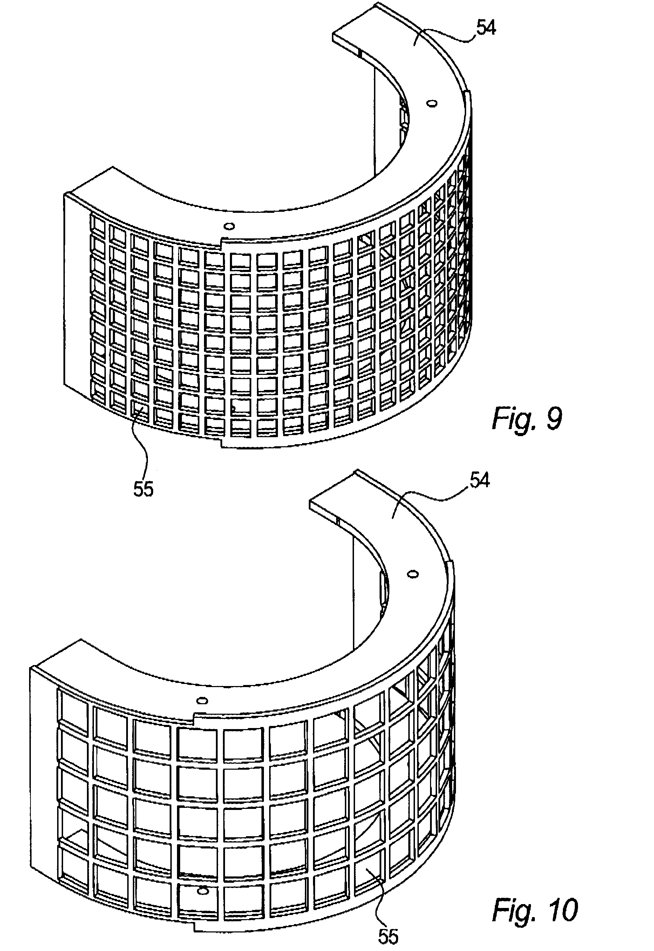

Fig. 9 and 10 shows two preferred embodiment of the sieve 54 to be used with the cutter of the device according to the present invention. By changing the size and configuration of the exit holes 55, desired straw lengths may be obtained.

In this embodiment of the invention the holes 55 in the sieves 54 are all square but in another embodiment the holes 55 could be round, oval, polygonal or have another suitable shape.

In this embodiment of the invention all the holes 55 in the sieve 54 illustrated in fig. 9 are approximately 1.3 x 1.3 cm = 1.7 cm² and the holes 55 in the sieve 54 illustrated in fig. 10 are approximately 2.5 x 2.5 cm = 6.25 cm². However in another embodiment the holes 55 could be of a different size or a single sieve 54 could comprise holes 55 of varying sizes.

In this embodiment the sieves 54 are formed as a semicircle to fit the outer shape of the rotating knife means, however in another embodiment the sieve 54 could be formed flat, polygonal, oval or in another shape suitable for retaining the straw material in the cutter until a desirable straw length is achieved.

The invention has been exemplified above with reference to specific examples of shredders, cutters, housings and so on. However, it should be understood that the invention is not limited to the particular examples described above but may be designed and altered in a multitude of varieties within the scope of the invention as specified in the claims.

## Claims

1. A bale processing device (100) comprising a feeding channel (1) including an open inlet end (17) through which a bale of straw material can be fed to a radial blower housing (2) accommodating shredding and discharging means including a shredder wheel (7, 8) provided with shredder drive means (5) for rotation of the shredder wheel (4), where the radial blower housing (2) is provided with one or more peripherally arranged discharge channels (3) and where the axis or rotation of said shredder wheel (4) is substantially parallel with said feeding channel (1);
**characterised in that**
in respect of one or more of said one or more peripherally arranged discharge channels (3), a cutter (200) comprising cutting knife means (50) for reducing the size of the straw material is arranged downstream of said shredder wheel (4).

2. A device according to claim 1, wherein the shredder wheel (4) is rotatable in both directions.

3. A device according to claim 1 or 2, wherein the radial blower housing (2) is provided with at least two peripheral discharge channels (3,3') pointing in different directions.

4. A device according to claim 1 - 3, wherein said cutter (200) is accommodated in a corresponding dedicated discharge channel (3).

5. A device according to claim 1 - 4, wherein the cutter (200) comprises a cutter axle (51), wherein said cutting knife means (50) comprises of one or more cutter knifes (52) being connected to said cutter axle (51), and wherein the cutter is provided with cutter drive means (53) for rotation of said cutter axle.

6. A device according to claim 5, wherein the cutter knifes (52) comprise an array of 1 - 30 knives, such as 2 - 25 knives, e.g. 3 - 20 knives, such as 4 - 19 knives, for example 5 - 18 knives, e.g. 6-17 knives, such as 7 - 16 knives, e.g. 8 - 15 knives,
such as 9 -14 knives, e.g. 10 - 13 knives, such as 11 - 12 knives; said knives being arranged onto said cutter axle, wherein said knives preferably being longitudinal knives and preferably being arranged in an axially orientation.

7. A device according to any of the preceding claims, wherein in respect of said one or more peripherally arranged discharge channels (3) comprising a cutter, a sieve (54) having exit holes (55) is arranged downstream of said cutter.

8. A device according to claim 7, wherein said sieve (54) is arranged in such close proximity of said cutting knife means that during use of the device, straw material to be spread will continuously be subjected to the cutting action of the cutting knife means of the cutter until the size of each straw material has a size that facilitates exit through the exit holes (55) of said sieve (54).

9. A device according to claim 7 or 8, wherein the area of each of said exit holes of said sieve is 0.25 - 50 cm², such as 0.5 - 40 cm², 0.75 - 30 cm², e.g. 1 - 20 cm², for example 2 - 15 cm², such as 3 - 10 cm², for example 4 - 9 cm², e.g. 5 - 8 cm², such as 6 - 7 cm².

10. A device according to any of the claims 7 - 9, wherein the sieve covers the passage way for the straw material on its downstream way from the discharge channel and out of the device in such a way that in order for the straw material having been subjected to the cutting action of the cutting knife means of the cutter to exit the device, said material must pass through the holes of said sieve.

11. A device according to claim 7 - 10, wherein said sieve (54) is releasable exchangeable.

12. A device according to any of preceding claims, wherein one or more of the discharge channels (3) comprises hatch means (56) for blocking the passage of straw material out of said one or more discharge channels.

13. A device according to any of the preceding claims, wherein the shredder drive means (5) for rotating the shredder wheel and/or the cutter drive means (53) for rotating the cutter axle (51) of the cutter independently is a hydraulic motor or an electrical motor.

14. A device according to any of the preceding claims, wherein said shredder drive means (5) for rotating the shredder wheel and said cutter drive means (53) for rotating the cutter axle (51) of the cutter are powered by the same hydraulic pump.

15. Use of a device according to any of the claims 1 - 14 for spreading straw material, such as hay or straw and the like in a farm, especially in a stable of a farm.
